**Europäisches Patentamt**

**European Patent Office**

**Office européen des brevets**

(19)

(11) Numéro de publication: **0 188 971**
**B1**

# (12) FASCICULE DE BREVET EUROPÉEN

(45) Date de publication du fascicule du brevet:
04.01.89

(21) Numéro de dépôt: **85402624.2**

(22) Date de dépôt: **24.12.85**

(51) Int. Cl.⁴: **C 09 K 17/00, E 21 B 33/138**

(54) **Procédé de consolidation d'une formation géologique par polymérisation thermique.**

(30) Priorité: **28.12.84 FR 8419961**

(43) Date de publication de la demande:
**30.07.86 Bulletin 86/31**

(45) Mention de la délivrance du brevet:
**04.01.89 Bulletin 89/1**

(84) Etats contractants désignés:
**DE GB IT NL**

(56) Documents cité:
**FR-A-1 409 599**
**GB-A-2 068 042**

(73) Titulaire: **INSTITUT FRANCAIS DU PETROLE, 4, Avenue de Bois- Préau, F-92502 Rueil- Malmaison (FR)**

(72) Inventeur: **Burger, Jacques, 12, rue François Debergue, F-78380 Bougival (FR)**
Inventeur: **Gadelle, Claude, 5, rue Filliette Nicolas Philibert, F-92500 Rueil Malmaison (FR)**
Inventeur: **Salle de Chou, Jacques, 133, rue de l'Abbé Groult, F-75015 Paris (FR)**

LIBER, STOCKHOLM 1989

EP 0 188 971 B1

## Description

La présente invention concerne un procédé de consolidation de formations géologiques, ce procédé étant notamment applicable à des réservoirs contenant du pétrole ou du gaz, pour éliminer les venues de sable dans les puits traversant des formations sableuses peu ou pas consolidées. D'une manière plus générale, ce procédé peut être utilisé pour consolider localement des formations perméables.

Diverses méthodes ont déjà été proposées pour empêcher les venues de sable dans les puits neufs ou pour traiter des puits donnant lieu à des venues de sable, lors de l'exploitation des gisements de pétrole ou de gaz.

Un premier type de méthode consiste à retenir le sable par un moyen mécanique, en utilisant des écrans artificiels à orifices calibrés, ou des empilages de graviers ayant une répartition granulométrique bien définie, selon la dimension des grains de sable de la formation géologique traversée par le puits. Une telle méthode, de mise en oeuvre délicate, est souvent utilisée pour équiper des puits neufs.

Un second type de méthode consiste à injecter, dans la formation géologique, une résine liquide qui, en se polymérisant, crée une liaison entre les grains de sable. L'efficacité d'une méthode chimique de ce second type est aléatoire, car la réaction de polymérisation de la résine injectée dépend essentiellement des conditions régnant dans le puits au niveau de la formation et des caractéristiques de cette dernière. Une telle méthode ne permet donc pas de contrôler le degré d'avancement de la réaction chimique. Il en résulte le risque, soit d'une consolidation insuffisante de la formation, si le degré de polymérisation de la résine est trop faible, soit d'une trop forte réduction de la perméabilité ou même d'un colmatage complet de la formation géologique, si une trop grande quantité de polymère est retenue dans certains pores.

Pour éviter ce problème, le brevet français N° 2 474 558 décrit un procédé dans lequel la réaction de polymérisation a lieu entre un agent chimique liquide contenant des catalyseurs appropriés mis en place autour du puits à traiter et un gaz oxydant injecté.

La circulation du gaz après la mise en place de l'agent polymérisable assure le maintien de perméabilité. Le mélange organique liquide contient un composé polyéthylénique et un catalyseur tels que les réactions de polymérisation oxydante conduisent à la consolidation du milieu sans qu'il soit nécessaire de préchauffer la formation.

Cependant, ce procédé nécessite l'utilisation de mélange oxygène-gaz inerte dont la disponibilité n'est pas toujours évidente. De plus, la quantité de gaz oxydant doit être limitée pour que, par suite du dégagement de chaleur par la réaction d'oxydation, la température n'atteigne pas des valeurs supérieures à 350°C, où le produit polymérisé se dégraderait par combustion.

L'objet de la présente invention est, par suite, de proposer un procédé plus souple d'utilisation et aisémnt contrôlable pour réaliser la consolidation d'une formation géologique, sans réduire sa perméabilité de manière appréciable. Cette méthode, applicable à des formations dont les caractéristiques peuvent varier assez largement, convient particulièrement bien au traitement de puits de pétrole ou de gaz donnant lieu à des venues de sable.

Ce résultat est atteint, selon l'invention, avec un procédé assurant l'altération thermique d'une substance polymérisable. Ce procédé comporte l'injection, dans la formation, d'un mélange organique liquide suivie de l'injection, au travers de ce mélange liquide, d'un mélange gazeux chaud et inerte chimiquement, de façon à transformer par une réaction de polymérisation thermique ledit mélange liquide en une substance liant les éléments non consolidés de la formation. On entend par un mélange gazeux inerte chimiquement, un mélange gazeux qui, dans les conditions opératoires du procédé, ne réagit pas avec les fluides du gisement ou avec les fluides injectés. Le gaz injecté pourra toutefois éventuellement contenir de l oxygène à l'état de traces.

Le procédé selon l'invention se distingue de l'enseignement du brevet GB-2 068 042, notamment par l'utilisation d'un mélange gazeux inerte. Il se distingue également du brevet français 1 409 599 qui concerne un procédé de consolidation des sols visant à rendre les sols imperméables, alors que notre procédé préserve la perméabilité des formations.

Le mélange gazeux chaud joue le rôle de fluide caloporteur afin d'augmenter la température de la couche géologique aux abords du puits jusqu'au niveau thermique nécessaire pour la polymérisation des hydrocarbures polyéthyléniques du mélange organique liquide. Le gaz sera injecté dans la formation à une température de préférence comprise entre 150 et 325°C. L'injection du mélange gazeux permet d'éviter une réduction appréciable de la perméabilité de cette dernière aux fluides tels que le pétrole ou le gaz naturel. La composition du mélange organique liquide, ainsi que la température et la quantité de gaz chaud, sont ajustées de manière à ce que le degré d'avancement de la polymérisation du mélange liquide soit suffisant.

En d'autres termes, l'invention fournit un procédé permettant de consolider une formation géologique sans réduire sa perméabilité de manière appréciable, par l'altération d'une substance polymérisable, ce procédé comportant l'injection d'un mélange organique liquide dans la formation, puis l'injection d'un mélange gazeux à travers ledit mélange liquide, et étant caractérisé en ce que ledit mélange organique liquide contient au moins un hydrocarbure polyéthylénique additionné éventuellement de catalyseurs et en ce que ledit mélange gazeux inerte chimiquement, est chauffé de façon à élever la température de la formation à une valeur telle que le mélange liquide se transforme par une réaction de polymérisation thermique en une substance liant les éléments non consolidés de la formation.

Plus particulièrement, l'invention fournit un procédé de consolidation d'une formation géologique comprenant les deux étapes successives suivantes:

a) on injecte dans la formation un mélange organique liquide contenant au moins un composé chimique polymérisable et éventuellement un catalyseur, ledit mélange étant capable de subir in situ, au contact d'un gaz chaud, des réactions conduisant à la formation d'un produit solide qui consolide cette formation, sans affecter notablement sa perméabilité, et

b) on injecte un gaz chaud inerte chimiquement en quantité suffisante pour obtenir une solidification sensiblement complète dudit mélange organique liquide.

Le mélange organique liquide utilisé dans le procédé selon l'invention contient au moins un hydrocarbure polyéthylénique additionné éventuellement de catalyseurs. Les hydrocarbures du mélange organique utilisé dans le procédé selon l'invention pourront avantageusement contenir un ou des hydrocarbures polyéthyléniques obtenus par polymérisation de diènes ou de triènes, éventuellement dilués par un solvant organique. L'hydrocarbure polyéthylénique utilisé sera avantageusement du polybutadiène. Les solvants utilisés seront constitués, par exemple, par des hydrocarbures tels que benzène, toluène, xylène, ou par une coupe pétrolière; la teneur en solvant sera avantageusement comprise entre 0 et 50 % pour limiter la réduction de réactivité due à la dilution.

Le catalyseur, additionné éventuellement au composé polyéthylénique, pourra être au moins un élément du groupe constitué par le baryum, le zirconium, le cérium, le lanthane et les lanthanides, le vanadium, le manganèse, le fer, le cobalt, le zinc, le nickel, le plomb et le cuivre. Les éléments d'un tel catalyseur seront utilisés sous forme de sels, tels que carboxylates, naphténates, sulfonates, octoates..., solubles dans les constituants de base du mélange organique. La teneur de la solution en chacun des métaux utilisés dans le catalyseur sera inférieure à 3 % poids et de préférence comprise entre 0,007 et 2 % poids. La composition exacte du catalyseur (métaux utilisés et teneurs en métaux) dépendra de la nature du milieu et des conditions de gisement (pression, température...).

Le catalyseur pourra également renfermer un composé organique tel qu'un peroxyde ou tout autre composé permettant la formation de radicaux libres. A ces composés peroxydiques on pourra éventuellement ajouter des catalyseurs choisis dans le groupe précédemment défini, constitué par le baryum, le zirconium, le cérium, le lanthane et les lanthanides, le vanadium, le manganèse, le fer, le cobalt, le zinc, le nickel, le plomb, le cuivre. Parmi les composés peroxydiques, on pourra citer, à titre d'exemple, l'hydroperoxyde de t-butyle, le peroxyde de di-t-butyle, l'hydroperoxyde de cumène...

La quantité de mélange organique injectée sera de préférence inférieure à 500 litres par mètre d'épaisseur de formation géologique; des quantités supérieures n'affectent cependant pas l'efficacité du procédé selon l'invention.

Dans l'application de la méthode aux réservoirs de gaz, le gaz injecté chimiquement inerte, tel que défini ci-dessus, sera avantageusement du gaz naturel.

Dans l'application de la méthode aux réservoirs d'huile, le gaz injecté sera avantageusement de la vapeur d'eau humide produite par un générateur de vapeur de surface, d'un modèle couramment utilisé pour la stimulation thermique des réservoirs. Le gaz injecté pourra aussi être constitué par un mélange de vapeur et de gaz brûlés produit par un générateur placé en fond de puits ou par toute autre combinaison de vapeur d'eau et de gaz inerte. On pourra utiliser tout autre mode de production de gaz chauds, tel que l'utilisation d'un brûleur à gaz ou de résistances chauffantes.

Le débit de gaz inerte sera tel que le gaz à injecter envahisse la hauteur à traiter. La durée d'injection du gaz inerte chaud sera de préférence inférieure à 48 heures; des durées supérieures n'affectent cependant pas l'efficacité du procédé selon l'invention. La durée de chauffage doit être suffisante pour que soit atteint le niveau thermique permettant audit mélange organique de se polymériser efficacement et d'assurer la cohésion entre les grains de la formation.

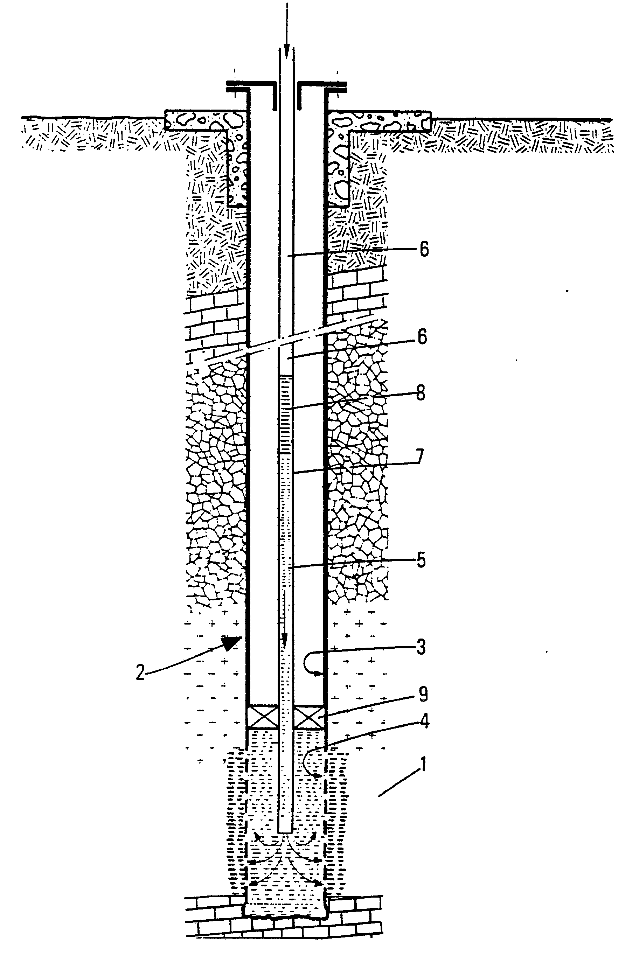

Sur la figure 1 annexée, illustrant schématiquement un mode de mise en oeuvre de l'invention, la référence 1 désigne une formation géologique sableuse traversée par un puits 2, qui comporte un cuvelage 3 muni de perforations 4 au niveau de la formation 1 dont on désire extraire un fluide, tel que du pétrole ou du gaz naturel.

Dans cet exemple de réalisation, le procédé selon l'invention est mis en oeuvre en injectant successivement dans la formation 1 à traiter des quantités prédéterminées du mélange organique liquide 5, tel qu'un polybutadiène additionné éventuellement d'un catalyseur tel que défini ci-dessus, éventuellement en mélange avec un autre liquide organique tel qu'un solvant ou une coupe pétrolière, et d'un gaz inerte 6, tel que la vapeur d'eau éventuellement diluée selon les indications ci-dessus.

Le mélange organique liquide et le gaz peuvent être injectés à la suite l'un de l'autre par l'intermédiaire d'une même colonne de production ou tubing 7 débouchant, à sa partie inférieure, sensiblement au niveau des perforations 4.

Un dispositif 9, du type packer, assurera l'étanchéité en obturant l'espace annulaire entre le cuvelage 3 et la colonne de production 7, au-dessus de la formation 1. Dans la colonne de production 7, le gaz inerte chaud est séparé du mélange organique liquide par un bouchon 8 d'une substance non polymérisable, ce bouchon étant constitué, par exemple, par un petit volume de solvant ou d'une coupe pétrolière, dans un puits à huile, ou de gaz naturel froid, dans un puits à gaz. On évite ainsi que des réactions du mélange organique ne se produisent à l'intérieur même de la colonne de production.

D'une façon générale, le liquide injecté en 5 est un mélange organique capable de se transformer, sous l'action de la chaleur, en un polymérisat conduisant à la consolidation de ladite formation aux abords du puits.

Dans le cas des gisements de pétrole, on pourra avantageusement faire précéder l'injection du liquide 5 par l'injection de fluides tels que le xylène ou une coupe pétrolière et un alcool, tel que l'isopropanol, afin de chasser le pétrole et l'eau présents aux abords du puits qui, s'ils sont en quantités excessives, peuvent avoir un effet néfaste sur l'efficacité de la consolidation du milieu.

La quantité de gaz injectée sera déterminée de façon à obtenir une solidification complète du liquide organique 5.

L'efficacité du procédé selon l'invention est illustrée par les essais suivants.

### Essai N° 1

Un mélange intime de sable de carrière (granulométrie comprise entre 150 et 330, de kaolinite et de polybutadiène est tassé à la température ambiante dans un tube vertical à paroi mince de 12,5 cm de diamètre, sur une hauteur de 15 cm. Des colliers chauffants sont mis en place autour du tube sur la hauteur occupée par le mélange, afin de permettre le contrôle de la fuite thermique transversale.

Le massif, obtenu en tassant un mélange de huit parties de sable, deux parties de kaolinite et une partie de polybutadiène a une porosité de 37 % et une saturation on composé polyénique égale à environ 50 % du volume des pores. Sa température initiale est de 50°C.

Un débit d'azote, égal à 3 litres/mn, est injecté à la pression atmosphérique par la face supérieure du tube, pendant 7 heures. En fin d'essai, on observe que le massif n'est pas consolidé.

Il apparaît donc que, dans les conditions opératoires choisies, aucune réaction ne se produit dans un massif imprégné de polybutadiène.

### Essai N° 2

Un essai a été réalisé en utilisant un mélange composé de 10 % de polybutadiène, de 85 % de sable de carrière et de 5 % de kaolinite.

L'expérience est effectuée à une température de 250°C sous une pression relative de 10 bar, avec un débit d'azote (15 % volume) et de vapeur d'eau (85 % volume) égal à 3 litres par minute pendant 7 heures. Après essai, on constate que le massif est bien consolidé; sa résistance à la compression est de 33 bar.

### Essai N° 3

Un essai a été réalisé dans un massif identique à celui de l'essai N° 2, à une température de 300°C et sous une pression de 10 bar. L'injection d'un mélange gazeux contenant 15 % d'azote et 85 % de vapeur d'eau a duré 7,5 heures à un débit de 3 litres/mn.

La résistance à la compression du milieu obtenu après essai est de 65 bar.

### Essai N° 4

Dans un massif constitué de 95 % de sable de carrière et de 5 % de kaolinite, on injecte un pétrole brut (densité égale à 0,87) de façon à saturer le volume de pores libre. Après déplacement de ce fluide par un bouchon d'essence, on injecte un mélange organique composé de 72 % de polybutadiène, de 20 % d'essence, de 5 % d'octoate de cobalt et 3 % d'octoate de zirconium. La cellule est chauffée à 210°C sous 10 bar et le l'azote est injecté à un débit de 3 litres/mn, pendant 80 heures. Après essai, le ni lieu a conservé sa perméabilité et est bien consolidé; sa résistance à la compression est comprise entre 90 et 130 bar suivant les échantillons.

### Essai N° 5

Dans un massif identique à celui réalisé lors de l'essai N° 4, on met en place un liquide organique composé de polybutadiène dilué par 20 % poids d'essence et additionné de 0,3 % poids de cérium. La cellule est chauffée pendant 25 heures à une température de 240°C et sous une pression de 10 bar; de l'azote est injecté à un débit de 3 litres/mn. Après essai, le milieu est bien consolidé; sa résistance à la compression est de 135 bar.

**Essai N° 6**

Un massif constitué de 95 % poids de sable et de 5 % poids d'argile est imprégné par un liquide organique composé de polybutadiène (78 % poids), essence (20 % poids) et peroxyde de di-t-butyle (2 %). Après mise en place du massif dans une cellule, on injecte sous 10 bar de pression de l'azote à un débit de 3 litres/mn à 200°C, pendant 53 heures. Après essai, des carottes sont prélevées dans le massif consolidé; la résistance à la compression est de 22 bar.

**Revendications**

1. Procédé permettant de consolider une formation géologique sans réduire sa perméabilité de manière appréciable, par altération d'une substance polymérisable, ce procédé comportant l'injection d'un mélange organique liquide dans la formation, puis l'injection d'un mélange gazeux à travers ledit mélange liquide, caractérisé en ce que ledit mélange organique liquide contient au moins un hydrocarbure polyéthylénique additionné éventuellement de catalyseurs et en ce que ledit mélange gazeux, inerte chimiquement, est chauffé de façon à élever la température de la formation à une valeur telle que le mélange liquide se transforme par une réaction de polymérisation thermique en une substance liant les éléments non consolidés de la formation.

2. Procédé selon la revendication 1, caractérisé en ce que ledit mélange organique injecté contient au moins un hydrocarbure polyéthylénique obtenu par polymérisation de diènes ou de triènes.

3. Procédé selon la revendication 1, caractérisé en ce que ledit mélange organique injecté contient du polybutadiène.

4. Procédé selon l'une des revendications précédentes, caractérisé en ce que ledit hydrocarbure polyéthylénique est dilué par un solvant.

5. Procédé selon l'une des revendications précédentes, caractérisé en ce que ledit hydrocarbure polyéthylénique est additionné d'un catalyseur renfermant au moins un élément du groupe constitué par le baryum, le zirconium, le cérium, le lanthane et les lanthanides, le vanadium, le manganèse, le fer, le cobalt, le zinc, le nickel, le plomb et le cuivre.

6. Procédé selon la revendication 5, caractérisé en ce que ledit élément du catalyseur est utilisé sous forme de sels, tels que carboxylates, naphténates, sulfonates ou octoates, solubles dans ledit mélange organique.

7. Procédé selon l'une des revendications précédentes, caractérisé en ce que ledit hydrocarbure polyéthylénique est additionné d'un composé, tel qu'un peroxyde, permettant la formation de radicaux libres.

8. Procédé selon l'une des revendications 1 à 7, caractérisé en ce que ledit mélange gazeux chaud injecté est du gaz naturel.

9. Procédé selon l'une des revendications 1 à 7, caractérisé en ce que ledit mélange gazeux chaud injecté est de la vapeur d'eau humide.

10. Procédé selon l'une des revendications 1 à 7, caractérisé en ce que ledit mélange gazeux chaud injecté est un mélange de vapeur et de gaz brûlés.

**Patentansprüche**

1. Verfahren zum Konsolidieren einer geologischen Formation ohne merkliche Verminderung ihrer Permeabilität, durch Verändern einer polymerisierbaren Substanz, unter Einführen bzw. Einspritzen eines organischen flüssigen Gemisches in die Formation, dann Einführen eines gasförmigen Gemisches durch dieses flüssige Gemisch hindurch, dadurch gekennzeichnet, daß dieses organische flüssige Gemisch wenigstens einen Polyäthylenkohlenwasserstoff, gegebenenfalls unter Zusatz von Katalysatoren, enthält und daß dieses gasförmige chemisch inerte Gemisch derart erwärmt wird, daß die Temperatur der Formation auf einen Wert derart erhöht wird, daß das flüssige Gemisch sich vermittels einer thermischen Polymerisationsreaktion in eine Substanz umformt, welche die nicht konsolidierten Elemente der Formation verbindet.

2. Verfahren nach Anspruch 1, dadurch gekennzeichnet, daß dieses eingeführte organische Gemisch wenigstens einen Polyäthylenkohlenwasserstoff enthält, der durch Polymerisation von Dienen oder Trienen erhalten wurde.

3. Verfahren nach Anspruch 1, dadurch gekennzeichnet, daß dieses eingeführte bzw. eingespritzte organische Gemisch Polybutadien enthält.

4. Verfahren nach einem der vorhergehenden Ansprüche, dadurch gekennzeichnet, daß dieser Polyäthylenkohlenwasserstoff durch ein Lösungsmittel verdünnt ist.

5. Verfahren nach einem der vorhergehenden Ansprüche, dadurch gekennzeichnet, daß diesem Polyäthylenkohlenwasserstoff ein Katalysator zugesetzt ist, der wenigstens ein Element der Gruppe enthält, die gebildet wird durch Barium, Zirkon, Cer, Lanthan und Lanthanide, Vanadium, Mangan, Eisen, Kobalt, Zink, Nickel, Blei und Kupfer.

6. Verfahren nach Anspruch 5, dadurch gekennzeichnet, daß dieses Katalysatorelement verwendet wird in Form von Salzen, beispielsweise Carboxylaten, Naphtenaten, Sulfonaten oder Octoaten, welche in diesem organischen Gemisch löslich sind.

7. Verfahren nach einem der vorhergehenden Ansprüche, dadurch gekennzeichnet, daß diesem Polyäthylenkohlenwasserstoff eine Verbindung wie ein Peroxid, welches die Bildung freier Radikaler ermöglicht, zugesetzt wird.

8. Verfahren nach einem der Ansprüche 1 bis 7, dadurch gekennzeichnet, daß dieses erwärmte eingeführte gasförmige Gemisch Erdgas ist.

9. Verfahren nach einem der Ansprüche 1 bis 7, dadurch gekennzeichnet, daß dieses erwärmte gasförmige Gemisch feuchter Wasserdampf ist.

10. Verfahren nach einem der Ansprüche 1 bis 7, dadurch gekennzeichnet, daß dieses erwärmte eingeführte gasförmige Gemisch aus Wasserdampf und verbrannten Gasen besteht.

## Claims

1. A method for consolidating a geological formation without appreciably reducing its permeability by altering a polymerizable substance, this method comprising injection of a liquid organic mixture into the formation, then injection of a gaseous mixture through said liquid mixture, characterized in that said liquid organic mixture contains at least one polyethylene hydrocarbon possibly with added catalysts, and in that said gaseous mixture which is chemically inert is heated so as to raise the temperature of the formation such that the liquid mixture is transformed by a thermal polymerization reaction into a substance binding the unconsolidated elements of the formation.

2. A method as in claim 1, characterized in that said injected organic mixture contains at least one polyethylene hydrocarbon obtained by polymerization of dienes or trienes.

3. A method as in claim 1, characterized in that said injected organic mixture contains polybutadiene.

4. A method as in one of the preceding claims, characterized in chat said polyethylene hydrocarbon is diluted with a solvent.

5. A method as in one of the preceding claims, characterized in chat said polyethylene hydrocarbon has an added catalyst containing at least one element from the group constituted by barium, zirconium, cerium, lanthanum and lanthanides, vanadium, manganese, iron, cobalt, zinc, nickel, lead and copper.

6. A method as in claim 5, characterized in that said element in the cacalyst is used in the form of salts such as carboxylates, naphthenates, sulphonates or octoates, soluble in that said organic mixture.

7. A method as in one of the preceding claims, characterized in chat said polyethylene hydrocarbon has an added compound, such as a peroxide, allowing the formation of free radicals.

8. A method as in one of claims 1 to 7, characterized in chat said injected hlot gaseous mixture is natural gas.

9. A method as in one of claims 1 to 7, characterized in chat said injected hot gaseous mixture is wet water vapour.

10. A method as in one of claims 1 to 7, characterized in that said injected flot gaseous mixture is a mixture of steam and burnt gases.